# EUROPÄISCHE PATENTSCHRIFT

(11) **EP 2 605 382 B1**
(45) Veröffentlichungstag und Bekanntmachung des Hinweises auf die Patenterteilung: **08.04.2020**
(21) Anmeldenummer: 12193939.1
(22) Anmeldetag: 23.11.2012
(51) Int. Cl.: H02K 1/14, H02K 11/00, H02K 11/25, H02K 15/095

(54) **Verfahren und Vorrichtung zur Herstellung eines Stators sowie Stator**
Device and method for producing a stator and stator
Procédé et dispositif de fabrication d'un stator et stator

(30) Priorität: 14.12.2011 DE 102011088523; 15.05.2012 DE 102012104210
(43) Veröffentlichungstag der Anmeldung: 19.06.2013
(73) Patentinhaber: Metabowerke GmbH, 72622 Nürtingen (DE)
(72) Erfinder: Schmohl, Michael, 72119 Ammerbuch (DE); Ebner, Felix, 73033 Göppingen (DE); Flöte, Enrico, 72636 Frickenhausen-Linsenhofen (DE)
(74) Vertreter: Markfort, Iris-Anne Lucie

(56) Entgegenhaltungen:
- EP-A1- 2 066 008
- DE-A1- 10 002 485
- GB-A- 941 010
- US-A- 5 343 613
- US-B1- 6 329 732

## Beschreibung

Die Erfindung betrifft ein Verfahren und eine Vorrichtung zur Herstellung eines Stators sowie einen Stator.

Statoren werden in elektrischen Antrieben bzw. Elektromotoren eingesetzt, die neben einem Stator auch einen Rotor umfassen. Eine übliche Anwendung solcher elektrischer Antriebe findet sich bei Haushaltsgeräten und Elektrowerkzeugmaschinen. Dabei werden in der Regel zweipolige Statoren eingesetzt.

Ein zweipoliger Stator für einen elektrischen Antrieb, insbesondere einen Elektromotor, mit einem entsprechenden Rotor weist in der Regel eine geschlossene Statorwand mit zwei einander gegenüberstehenden, paarweise angeordneten Polhörnern bzw. Polspitzen auf. Innerhalb dieser Polhörner ist der Rotor des elektrischen Antriebs angeordnet, welcher sich um eine Drehachse innerhalb des Stators rotatorisch bewegt. Somit wird der maximale Außendurchmesser des Rotors im Wesentlichen durch den Abstand der Polhörner voneinander bestimmt, während der Außendurchmesser des Stators die Baugröße des Elektromotors vorgibt.

Bei Elektrowerkzeugmaschinen, bei denen der Elektromotor in einem Gehäuseteil im Griffbereich des Anwenders angeordnet ist, wie zum Beispiel bei Winkelschleifern, Geradschleifern oder Polierern, kommt dem Durchmesser des Elektromotors eine besondere Bedeutung zu, da er einen direkten Einfluss auf den Griffdurchmesser und damit auf den Umfang des Griffteils hat. Gerade bei solchen Elektrowerkzeugmaschinen sollte der Umfang des Gehäuseteils, das den Handgriff bildet (das sogenannte Fadenmaß) für eine möglichst komfortable Handhabung der Elektrowerkzeugmaschine eine gewisse Größe nicht überschreiten. Aus diesem Grund ist es seit langem eine Aufgabe im Zusammenhang mit derartigen Elektrowerkzeugmaschinen, dieses Fadenmaß zu reduzieren.

Der Stator weist einen Spulenraum auf, der eine Anzahl von Spulennuten, in der Regel vier Spulennuten, umfasst, die von den jeweiligen Polhörnern und der Statorwand des zweipoligen Stators begrenzt werden. In diese Spulennuten wird üblicherweise ein aus Kupfer bestehender Draht bzw. werden aus einem solchen gefertigte Feldspulen eingelegt.

Elektrische Antriebe mit einem solchen zweipoligen Stator sowie einem darin angeordneten Rotor sind in der Regel luftgekühlt, wobei Umgebungsluft in den elektrischen Antrieb eingesaugt und durch diesen hindurch gezogen wird. Die durch den elektrischen Antrieb hindurchströmende Luft führt die Wärme von dem Kupferdraht des Spulendrahts ab und stellt dabei sicher, dass der elektrische Antrieb ausreichend Leistung abgeben kann ohne zu überhitzen.

Grundsätzlich fallen in einem elektrischen Antrieb verschiedene Arten von Verlusten an, die in Summe die Verlustleistung bilden, welche die zur Verfügung stehende Nutzleistung des Antriebs verringert. Neben der gewünschten Leistung sind es folglich die Verluste (und die zulässige Erwärmung) eines elektrischen Antriebs, welche dessen Größe, d.h. dessen Abmessungen bestimmen. Allgemein lassen sich die Verluste in materialabhängige Verluste (Kupferverluste, Eisenverluste) und materialunabhängige Verluste unterteilen, wobei letztere vornehmlich von der Konstruktion des Antriebs abhängen. So ist es beispielsweise notwendig, Reibungsverluste innerhalb des Antriebs möglichst gering zu halten. Zudem können Strömungsverluste einer Luftströmung innerhalb des Antriebs die Luftkühlung und somit die Leistung verringern.

Eine entscheidende Anforderung, die seit Jahren an den elektrischen Antrieb von beispielsweise Elektrowerkzeugmaschinen gestellt wird, besteht darin, zunehmend höhere Leistungen bei gleichbleibender Gerätegröße oder bei einer gleichzeitigen Reduktion der Gerätegröße zu bieten.

Als Nachteil in Zusammenhang mit der Luftkühlung elektrischer Antriebe hat sich in der Praxis gezeigt, dass in der Kühlungsluft oftmals Staubpartikel enthalten sind, die an dem Spulendraht angreifen und dadurch zu einer Abrasion des Spulendrahts führen können.

Um diesem Problem zu begegnen ist es aus der Praxis bekannt, handeingelegte, vorgewickelte Spulen vor dem Einlegen in den Spulenraum mit einer Bandage und/oder Isolierpapier zu umwickeln. Dabei ist jedoch dieser zusätzliche Arbeitsschritt des Umwickelns der vorgewickelten Spule äußerst aufwendig und somit sowohl zeit- also auch kostenintensiv bei der Herstellung. Weitere Nachteile von handeingelegten, vorgewickelten Spulen ergeben sich aus dem ebenfalls kosten- und zeitintensiven Schritt des Handeinlegens der Spule in den Spulenraum und aus dem Umstand, dass der Spulenraum bei handeingelegten Spulen niemals vollständig ausgenutzt werden kann, da stets ein geringer Spalt zwischen der Spulennut und der eingelegten vorgewickelten Spule verbleibt.

Alternativ wird der Spulenraum eines Statorkörpers direkt mit Spulendraht bewickelt, vorzugsweise mit Hilfe einer Nadelwickelmaschine oder dergleichen, da hierdurch eine höhere Packungsdichte des Spulendrahts in dem Spulenraum erreicht wird und weiterhin eine Schnellbewicklung erfolgen kann.

Ein solches automatisiertes Verfahren zum Einlegen von Kupferdraht in Form einer Feldspule in den Spulenraum zwischen Polhörnern und Statorwand eines zweipoligen Stators ist beispielsweise aus der EP 1 225 679 A1 sowie GB 941 010 A bekannt.

Es ist insbesondere im Falle eines vorgesehenen Überlastbetriebs des elektrischen Antriebs wünschenswert, die Temperatur in der Spule mittels eines Temperaturfühlers bzw. Temperatursensors, insbesondere laufend, zu erfassen bzw. zu überwachen. Bei handeingelegten Spulen wird der Temperatursensor in einfacher Weise während des Wicklungsprozesses von Hand in Wicklung eingelegt. Anschließend kann eine Pulverbeschichtung erfolgen.

Bei direkt automatisiert bewickelten Statoren sind Lösungen bekannt, bei welchen die Temperatursensoren in die Wicklungen eingewickelt werden, was die Handhabung während der Montage jedoch erheblich erschwert. Nach der direkten Bewicklung ist ein Einführen eines Temperatursensors aufgrund der hohen Packungsdichte nicht mehr möglich. Darüber hinaus ist es bekannt, die Temperatursensoren in an dem Spulenkörper vorhandene Vorrichtungen bzw. Taschen, wie z. B. Messingrohre oder dergleichen, einzuführen. Hierzu muss jedoch ein Spulenkörper vorhanden sein. Bei bisherigen Lösungen wird der Temperatursensor nur zu etwa 50% von der Wicklung umschlossen, wodurch die Genauigkeit und Zuverlässigkeit der Temperaturmessung erheblich beeinträchtigt wird.

Um einerseits eine zuverlässige und aussagekräftige Temperaturmessung in der Spule bereitzustellen und andererseits eine größere Leistungsfähigkeit des elektrischen Antriebs und verbesserte Lebensdauer zu ermöglichen, schlägt die vorliegende Erfindung ein Verfahren zur Herstellung eines, insbesondere zweipoligen Stators mit einem Statorkörper und wenigstens einer daran angebrachten Spule gemäß den Merkmalen des Anspruchs 1 vor.

Die Spule wird hierbei durch ein automatisiertes Einlegen von Spulendraht mit mehreren Wicklungen in einen Spulenraum des Stators gebildet, wobei der Spulenraum eine Anzahl von Spulennuten umfasst, die von Polhörnern und einer Statorwand des Stators begrenzt werden. Das Verfahren umfasst gemäß einem ersten Erfindungsaspekt die Verfahrensschritte: Einlegen wenigstens eines Platzhalterelements in den Bereich des Spulenraums in der Weise, dass sich beim automatisierten Einlegen des Spulendrahts in den Spulenraum wenigstens ein durch das wenigstens eine Platzhalterelement begrenzter Hohlraum in der Wicklungsstruktur der Spule oder in wenigstens einer der Spulennuten ergibt, automatisiertes Einlegen des Spulendrahts in den Spulenraum, Entfernen des wenigstens einen Platzhalterelements aus der Wicklungsstruktur der Spule oder aus der wenigstens einen Spulennut, und Einführen des wenigstens einen Temperatursensorelements in den verbleibenden wenigstens einen Hohlraum in der Wicklungsstruktur der Spule oder der wenigstens einen Spulennut. Das wenigstens ein Temperatursensorelement wird im Bereich der Spule vorgesehen, um die Temperatur der Spule während des Betriebs zu erfassen. Durch die Verwendung eines Platzhalters beim direkten Wickeln des Stators ergibt sich eine Hohlraum bzw. eine Führung in der Wicklung oder in wenigstens einer der Spulennuten, in welche ein Temperaturfühler in vorteilhafter Weise eingebracht werden kann. Sonach wird bei gleichzeitiger hoher Packungsdichte eine optimale und aussagekräftige Temperaturmessung der Spule gewährleistet, da der Temperatursensor wenigstens annähernd vollständig von der Wicklung umschlossen oder zusammen mit der Spule in der Spulennut untergebracht ist.

Gemäß einem zweiten Erfindungsaspekt umfasst das Verfahren die Verfahrensschritte: Einlegen wenigstens eines Platzhalterelements in den Bereich des Spulenraums in der Weise, dass sich beim automatisierten Einlegen des Spulendrahts in den Spulenraum wenigstens ein durch das wenigstens eine Platzhalterelement begrenzter Hohlraum in wenigstens einer der Spulennuten ergibt, automatisiertes Einlegen des Spulendrahts in den Spulenraum, Entfernen des wenigstens einen Platzhalterelements aus der wenigstens einen Spulennut, und Einführen wenigstens eines schlauchförmigen Isolierelements in den verbleibenden wenigstens einen Hohlraum in der wenigstens einen Spulennut.

Dadurch dass das wenigstens eine schlauchförmige Isolationselement nicht nur auf die Drahtendabschnitte aufgeschrumpft werden kann, sondern in den Hohlraum und damit in die Spulennut ein Stück weit eingeschoben werden kann, wird eine gegenüber dem Stand der Technik optimierte Isolations- und Schutzwirkung, insbesondere im Übergangsbereich von der Spule nach außen erzielt. Hierdurch kann eine verbesserte Lebensdauer eines mit einem solchen Stator bestückten elektrischen Antriebs bereitgestellt werden.

Das wenigstens eine Temperatursensorelement und/oder das wenigstens eine schlauchförmige Isolierelement kann bzw. können in dem wenigstens einen Hohlraum fixiert werden.

In einem weiteren Verfahrensschritt kann der eingelegte Spulendraht mittels eines Fixiermittels fixiert werden.

Das wenigstens eine Temperatursensorelement und/oder das wenigstens eine schlauchförmige Isolierelement kann bzw. können mittels des Fixiermittels für den eingelegten Spulendraht und/oder eines zusätzlichen Sensorfixiermittels in dem wenigstens einen Hohlraum fixiert werden. Dabei kann bzw. können das wenigstens eine Temperatursensorelement und/oder das wenigstens eine schlauchförmige Isolierelement wenigstens teilweise mit dem Fixiermittel für den eingelegten Spulendraht und/oder dem zusätzlichen Sensorfixiermittel beschichtet werden.

Das Fixiermittel für den eingelegten Spulendraht und/oder das zusätzliche Sensorfixiermittel kann dabei einen Klebstoff, Träufelharz oder Backlack umfassen.

Das wenigstens eine Platzhalterelement kann einen Stift und/oder einen Teil einer Wickelschablone umfassen und/oder im Bereich des Wickelkopfes oder in einer der Spulennuten, insbesondere in einer Richtung senkrecht zur Längsachse der Spulennut, zwischen der Spule einerseits und der Statorwand und/oder einem der Polhörner andererseits, vorgesehen werden. Weiterhin kann das Platzhalterelement durch eine axiale Setzbewegung eingelegt und/oder, beispielsweise nach Abschluss des Wickelvorgangs, entfernt werden. Unter einer axialen Setzbewegung wird eine Bewegung in Richtung einer Achse verstanden, die im Wesentlichen parallel zu der Mittellängsachse des Stators ist.

Das Platzhalterelement kann zudem oder alternativ integral mit einer Aufnahmeeinrichtung zur Aufnahme des zu bewickelnden Stators ausgebildet sein, wobei die Aufnahmeeinrichtung während des Wickelvorgangs mit der Wickelschablone zusammenwirkt.

Weiterhin kann das automatisierte Einlegen des Spulendrahts mit Hilfe eines rotierenden Wickelarms erfolgen.

Ferner kann der Stator mehrteilig ausgebildet sein und in dessen jeweilige Statorsegmente ein Spulendraht eingelegt werden, wobei in einem weiteren Schritt die Statorsegmente vorzugsweise mit einem zusätzlichen Statorfixiermittel stoffschlüssig miteinander verbunden werden können. Das zusätzliche Statorfixiermittel kann Klebstoff oder Träufelharz, vorzugsweise ein dual härtendes Harz umfassen. Das zusätzliche Statorfixiermittel kann auch als Sensorfixiermittel verwendet werden, wobei das Beschichten des gesamten Statorkörpers bzw. Stators und das Fixieren des Temperatursensorelements und/oder des wenigstens einen schlauchförmigen Isolierelements in einem Schritt erfolgen kann. Durch die Kapillarwirkung werden dabei sämtliche Bereiche und Zwischenräume des Stators erreicht.

Der vorzugsweise zweipolige Stator kann zweiteilig ausgeführt sein und die Statorsegmente durch zwei Statorhälften gebildet werden.

Insbesondere bei einer mehrteiligen Gestaltung des Stators kann das automatisierte Einlegen des Spulendrahts auch mit Hilfe einer Aufnahmeeinrichtung für ein Statorsegment erfolgen, die zumindest um eine Drehachse rotierbar ist.

Dieser vorzugsweise zweipolige Stator ist mit dem vorstehend beschriebenen Verfahren hergestellt sein.

Des Weiteren ist in Anspruch 8 eine Vorrichtung zur Herstellung eines derartigen Stators angegeben, umfassend eine Vorrichtung zum Einlegen wenigstens eines Platzhalterelements in den Spulenraum des Stators, wobei beim Einlegen des wenigstens einen Platzhalterelements in den Spulenraum sichergestellt ist, dass sich beim automatisierten Einlegen des Spulendrahts in den Spulenraum ein durch das wenigstens eine Platzhalterelement begrenzter Hohlraum in der Wicklungsstruktur der Spule oder in wenigstens einer der Spulennuten ergibt.

Nachfolgend ist anhand der Zeichnung prinzipmäßig ein Ausführungsbeispiel der Erfindung beschrieben.

Die beigefügten Figuren zeigen beispielhaft eine bevorzugte Ausführungsform, bei der die einzelnen Merkmale der Erfindung miteinander kombiniert sind. Der Fachmann wird diese jedoch selbstverständlich auch losgelöst voneinander betrachten und oder zu anderen sinnvollen Kombinationen zusammenfassen können.

Es zeigen schematisch:
- Figur 1: eine isometrische Ansicht eines zweipoligen Stators;
- Figur 2: einen Querschnitt senkrecht zu der Längsachse des Stators der Figur 1;
- Figur 3: eine Draufsicht auf eine Statorhälfte des Stators gemäß Figuren 1 und 2;
- Figur 4: eine Detailansicht einer Verbindungsstelle eines Stators gemäß Figuren 1 und 2;
- Figur 5a: eine Detailansicht einer Statorhälfte mit einem Temperatursensorelement in einer ersten Ausführungsform;
- Figur 5b: eine Detailansicht einer Statorhälfte mit einem Temperatursensorelement in einer zweiten Ausführungsform;
- Figur 6: eine Wickelschablone, welche bei einem Wickelvorgang eines erfindungsgemäßen Stators verwendet werden kann;
- Figur 7: in einer Ansicht von der Außenseite her eine in eine Statorhälfte eingesetzte Wickelschablone nach einem Wickelvorgang;
- Figur 8: in einer isometrischen Ansicht einen mit einer Beschichtung versehenen Stator;
- Figur 9: eine Schnittdarstellung des in Figur 8 gezeigten Stators; und
- Figur 10: eine Aufnahmeeinrichtung sowie Wickelschablone für einen erfindungsgemäßen Stator.

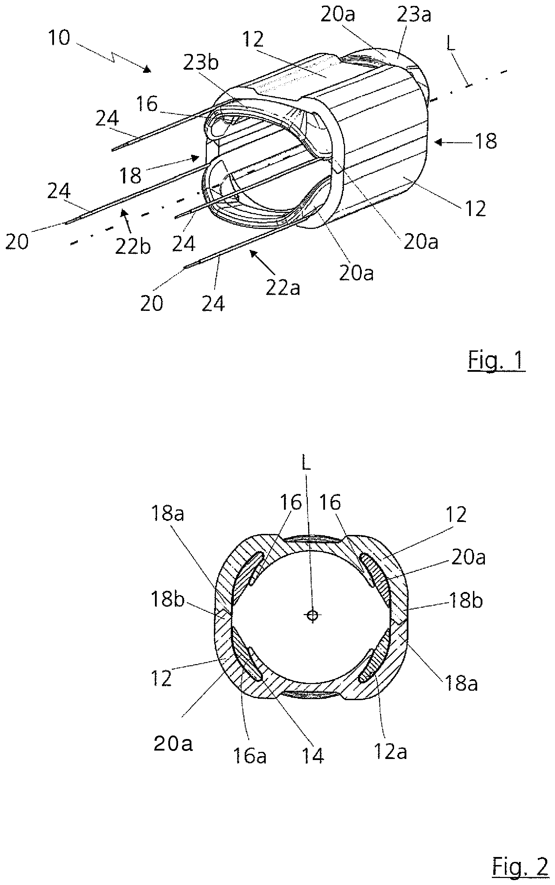

In der Figur 1 ist ein zweipoliger Stator eines elektrischen Antriebs gezeigt und allgemein mit dem Bezugszeichen 10 bezeichnet. Dieser zweipolige Stator umfasst einen Statorkörper, welcher im Bereich einer sich entlang einer Längsachse L des Stators erstreckenden Trennungsebene in zwei Statorsegmente bzw. Statorhälften 12 geteilt ist. Die beiden Statorhälften 12 sind dabei als identische Teile ausgebildet, was die Herstellung des Statorkörpers besonders einfach macht. In üblicher Weise ist der dargestellte Statorkörper des Stators 10 durch Stanzpaketieren von identischen Blechlamellen zu einem Blechpaket hergestellt.

Weiterhin umfasst jede der Statorhälften 12 zwei Polhörner bzw. Polspitzen 16 (vgl. auch Fig. 2), die sich von der Innenumfangsfläche 12a der jeweiligen Statorhälfte 12 nach innen erstrecken und somit den Innenraum des Stators 10 für einen darin aufzunehmenden Rotor (nicht dargestellt) begrenzen.

Die beiden Statorhälften 12 sind im Bereich zweier Verbindungsstellen 18 miteinander verbunden, wobei jede Statorhälfte 12 eine erste Verbindungsstelle 18a sowie eine zweite Verbindungsstelle 18b aufweist.

Weiterhin sind in Figur 1 Endabschnitte bzw. Drahtenden 22a und 22b eines spulenförmig, d.h. in der Form einer Spule 20a mit einer Wicklungsstruktur und Wickelköpfen 23a und 23b, eingelegten Spulendrahts 20 zu erkennen. Wie aus Figur 1 ersichtlich, sind die Drahtenden 22a, 22b als Anschlussdrähte jeweils mit einem Schrumpfschlauch 24 als Schlauchelement versehen, welches nicht außerhalb des Stators 10 endet, sondern in den Stator 10 eingeschoben ist, d.h. in die Wicklungsstruktur der Spule 20a hineinragt, um eine optimale Isolierung zu erreichen und einen Schutz vor leitfähigen Ablagerungen zu erhalten. Als Schlauchelemente kommen auch Glasgewebeschläuche in Betracht.

In anderen Ausführungsbeispielen könnte statt des Schlauchelements auch ein Hülsenelement vorgesehen sein.

Wie in Figur 2 deutlich zu erkennen ist, wird die erste Verbindungsstelle 18a der beiden Statorhälften 12 jeweils durch eine entlang der Längsachse L verlaufende dreieckförmige Nut 18a gebildet, während die zweite Verbindungsstelle 18b durch einen korrespondierenden entlang der Längsachse L verlaufenden dreieckförmigen Vorsprung 18b gebildet ist. Durch die spezielle Ausbildung der ersten und zweiten Verbindungsstelle 18a und 18b kann eine einfache Herstellung der Verbindungsstellen 18 ermöglicht werden.

Weiterhin wird durch die Ausprägung der ersten und zweiten Verbindungsstellen 18a und 18b eine Ausrichtung der Statorhälften 12 zueinander erreicht, wenn die jeweils korrespondierende erste Verbindungsstelle 18a mit der zweiten Verbindungsstelle 18b in Anlage gebracht wird. Schließlich kann durch diese spezielle Ausgestaltung der Verbindungsstellen 18 gewährleistet werden, dass die Statorhälften 12 bei der Herstellung des Statorkörpers in direkter Anlage zueinander aus dem Material ausgestanzt werden können, was zu einem geringeren Anfallen von Verschnitt gegenüber dem Stand der Technik führt.

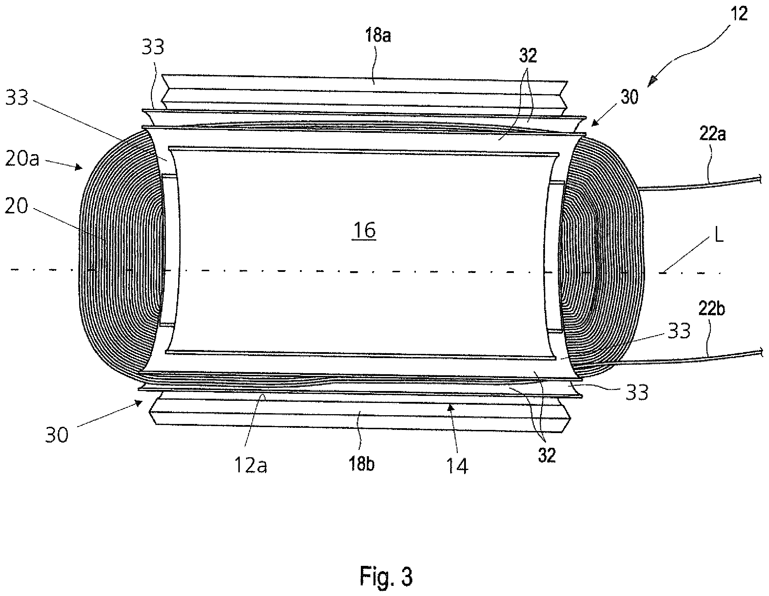

In Figur 2 ist ebenfalls deutlich gezeigt, dass die Statorinnenwand 12a und die radial äußere Wand 16a der Polhörner 16 eine Nut 14 begrenzen, in welche der aus Kupfer hergestellte Spulendraht 20 aufgenommen werden kann. Wie in den Figuren (vgl. insbesondere Figuren 2 und 3) zu erkennen ist, wird der Spulendraht 20 in der Form einer Spule 20a in den durch die Nuten 14 einer Statorhälfte 12 ausgebildeten Spulenraum eingelegt.

In Figur 2 ist weiterhin gezeigt, dass der eingelegte Spulendraht 20 nicht wie in der Praxis üblich mit einem Füllgrad von weniger als 100 % in die Nut 14 eingelegt ist, sondern über die Nut 14 hinaus gewickelt ist. Darin ist eine Besonderheit der vorliegenden Erfindung zu sehen, da durch einen Füllgrad von mehr als 100 % eine erhöhte Leistung eines Elektromotors mit einem derart gewickelten Stator 10 gegenüber einem Elektromotor mit einem konventionell gewickelten Stator erreicht werden kann. Insbesondere ermöglicht es die in Figur 2 gezeigte Wicklungsform, insgesamt mehr Spulenwindungen in einem hohlzylindrischen Volumenelement (welches sich zwischen den Statorhälften und der Außenseite eines Ankers befindet) anzuordnen als nach dem Stand der Technik möglich. Bei gleichem beanspruchtem Bauraum kann so insgesamt mit der Spule 20a ein höherer magnetischer Fluss erzeugt werden und damit eine höhere Leistung des Elektromotors erreicht werden. Ebenso kann für eine gegebene Anzahl von Windungen die Spule 20a erheblich flacher ausgelegt werden als bisher nach dem Stand der Technik möglich, so dass bei gleicher Windungszahl ein Anker höheren Durchmessers verwendet werden kann. Damit ergibt sich gegenüber dem Stand der Technik ein höheres Drehmoment auf die Ankerwicklungen, was im Ergebnis ebenfalls zu einer Leistungssteigerung führt. Ebenso kann bei gleichbleibender Leistung eine Verkleinerung des Elektromotors und damit eine Verringerung des Fadenmaßes eines zugehörigen Elektrohandwerkzeuges erreicht werden.

Da in dem über die Nut 14 hinausgehenden Bereich die mechanisch stabilisierende Wirkung der Polhörner 16 wegfällt, sind zusätzliche Maßnahmen erforderlich, um zu gewährleisten, dass die Spule ihre Form beibehält und sich die Wicklungen nicht voneinander lösen.

Hierzu ist eine zumindest teilweise stoffschlüssige Verbindung der Windungen der Spule 20a untereinander mindestens in Teilen des außerhalb der Nut 14 befindlichen Bereiches der Spule 20a vorteilhaft. Diese stoffschlüssige Verbindung kann beispielsweise unter Verwendung eines Backlackdrahtes verwirklicht werden. Unter einem Backlackdraht wird ein Spulendraht verstanden, der eine temperaturfeste Grundisolation und eine durch Erhitzen verklebende, oft auch dabei polymerisierende Deckschicht aufweist. Zusätzlich oder alternativ kann die stoffschlüssige Verbindung auch mittels eines Träufelharzes geschaffen werden, welches aufgrund der Kapillarwirkung der Zwischenräume zwischen den Windungen in der Spule 20a die Spule 20a nach einem Eintauchen praktisch vollständig durchdringt.

Wie in Figur 3 gezeigt ist, umfasst der zweipolige Stator 10 mit seinen beiden Statorhälften 12 nicht nur einen durch die Statorhälften 12 gebildeten Statorkörper, der mit Spulendraht 20 bewickelt ist, sondern auch Isolierpapier 30, das in die Nuten 14 eingelegt wird, ehe der Spulendraht 20 auf die jeweilige Statorhälfte 12 aufgewickelt wird.

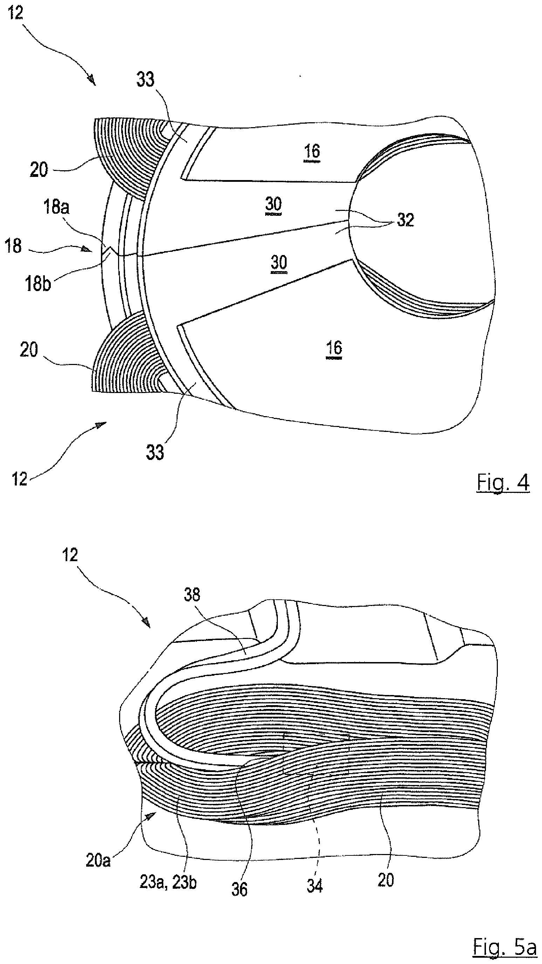

Das Isolierpapier 30 dient dazu, die durch den Spulendraht 20 gebildete Spule 20a im Betrieb eines den Stator 10 aufweisenden Elektromotors vor Abrasion zu schützen und elektrisch gegenüber dem Statorkörper sowie dem benachbarten Rotor (nicht gezeigt) zu isolieren. So ist gemäß der Norm DIN EN 60745 ein Mindestabstand von 2 mm Luftstrecke zwischen einem aktiven Teil, wie dem Statorkörper oder dem Rotor, und dem Spulendraht sicher zu stellen um eine elektrische Isolation zu gewährleisten. Diese wird bei dem vorstehend angesprochenen Füllgrad des Spulendrahts 20 über 100 % dadurch sichergestellt, dass das Isolierpapier 30 mit einem radialen Überstand 32 (vgl. auch Figur 4) über die jeweiligen Polhörner 16 hinaus vorgesehen ist.

Als radialer Überstand 32 wird der Teil des Isolierpapiers 30 verstanden, der bezogen auf die Längsachse L radial, d.h. in einer Richtung senkrecht zu der Längsachse L, über die Polhörner 16 übersteht.

Dabei kann der Überstand 32 des Isolierpapiers 30, wie in Figur 4 gezeigt, derart gewählt sein, dass zumindest die radial innenliegenden Abschnitte des überstehenden Isolierpapiers 32 dann, wenn die Statorhälften 12 zusammengesetzt sind, d. h. im Bereich ihrer Verbindungsstellen 18 aneinander anliegen, die Überstände 32 des Isolierpapiers 30 der beiden Statorhälften 12 ebenfalls aneinander anliegen bzw. sich überlappen. Zudem kann, wie in Figur 3 zu erkennen ist, auch ein (bezogen auf die Längsachse L des Stators 10) axialer Überstand 33 des Isolierpapiers 30 sinnvoll sein, um den elektrischen Sicherheitsabstand von 2 mm Luftstrecke zwischen Spulendraht und aktivem Eisen zu gewährleisten. Als axialer Überstand 33 wird der Teil des Isolierpapiers 30 verstanden, der bezogen auf die Längsachse L axial, d.h. in einer Richtung parallel zu der Längsachse L, über die Polhörner 16 übersteht.

Wie aus Figur 5a ersichtlich, ist erfindungsgemäß ein gestrichelt angedeutetes Temperatursensorelement 34 in einer Aussparung bzw. einem Hohlraum 36 in der Wicklungsstruktur der Spule 20a vorhanden, um die Temperatur der Spule 20a bzw. des Spulendrahts 20 während des Betriebs zu erfassen. Das Temperatursensorelement 34 ist wenigstens annähernd vollständig von der Spule 20a umgeben, so dass in Figur 5a lediglich die Anschlussleitungen 38 aus der Spule herausragen. Das Temperatursensorelement 34 kann nur in eine oder auch in beide Statorhälften 12 eingebracht werden.

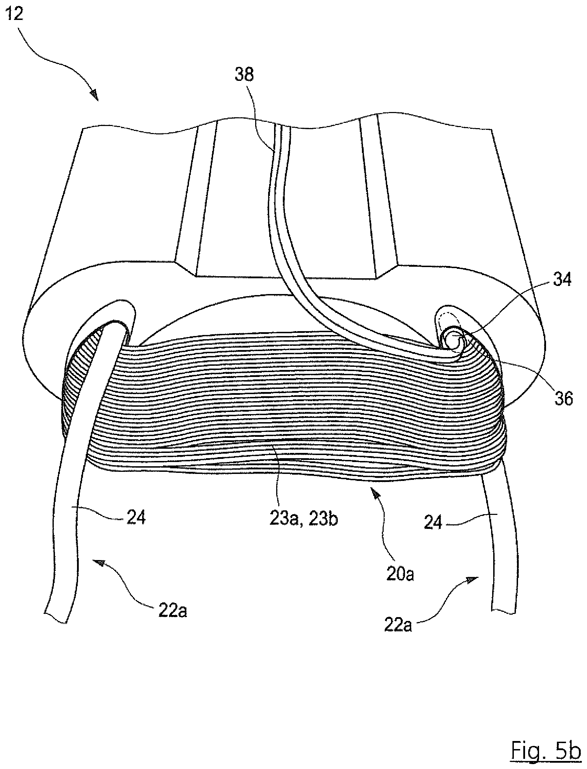

Wie aus Figur 5b ersichtlich, kann das Temperatursensorelement 34 erfindungsgemäß alternativ auch in einem Hohlraum 36 in wenigstens einer der Spulennuten 14 untergebracht sein. Dazu kann das Temperatursensorelement 34 zwischen der Spule 20a einerseits und der Statorwand und/oder einem der Polhörner 16 andererseits angeordnet sein.

Eine weitere Besonderheit der vorliegenden Erfindung ist darin zu sehen, dass die beiden Drahtenden bzw. Drahtendabschnitte 22a, 22b, welche beim Wickelvorgang von der Spule 20a an den Statorhälften 12 entstehen, wie vorstehend erwähnt als Anschlussdrähte bzw. elektrische Anschlüsse des Elektromotors genutzt werden können. Hierfür werden die Drahtenden 22a, 22b in ausreichend großer Länge aus der Spule 20a herausgeführt, um die Funktion von aus dem Stand der Technik bekannten separaten Litzen zu übernehmen und einen Anschluss der Spule 20a an eine Stromquelle oder einen Stromverteiler (nicht gezeigt) zu ermöglichen. An den freien Enden der Drahtendabschnitte 22a, 22b können separate Anschlusselemente, beispielsweise in der Form einer Crimpkralle (nicht dargestellt) in der Weise befestigt werden, dass diese die isolierende Außenschicht (im dargestellten Beispiel eine isolierende Grundschicht sowie eine darauf aufgebrachte Backlackschicht) des Spulendrahts 20 durchdringen und eine elektrische Kontaktierung der Spule ermöglichen. Die Anschlusselemente (nicht dargestellt) können zudem in ihrer Außengeometrie in der Art eines Steckers ausgebildet sein, der in einen korrespondierenden Steckverbinder an der Stromquelle bzw. dem Stromverteiler des elektrischen Antriebs eingesteckt werden kann.

Nachfolgend wird der Herstellungsprozess eines zweipoligen Stators unter Bezugnahme auf die Figuren beschrieben:
Aus einem durch Stanzpaketieren von identischen Blechlamellen hergestellten Blechpaket werden die beiden Statorhälften 12 in Anlage zueinander ausgestanzt, die in einem weiteren Prozessschritt mit Kupferdraht bewickelt werden sollen.

Um im Betrieb eine ausreichende elektrische Isolation gewährleisten und ausreichend große Abstände zwischen der Spule und aktiven Teilen des Elektromotors bereitstellen zu können, wird, bevor die Statorhälften 12 bewickelt werden, Isolierpapier 30 in die Nuten 14 der jeweiligen Statorhälften 12 eingelegt.

Um zu gewährleisten, dass das Isolierpapier 30 relativ zu der jeweiligen Statorhälfte 12, in deren Nut 14 das Isolierpapier 30 eingelegt wird, fixiert ist, können die Statorhälften 12 in einem vorgeschalteten Prozessschritt vor dem Einlegen des Isolierpapiers 30 in die zugehörigen Nuten 14 zumindest in dem Bereich der Nuten erwärmt werden, beispielsweise auf eine Temperatur von wenigstens 150° Celsius. Das Isolierpapier 30 ist auf derjenigen Seite, mit der es in Anlage an die erwärmte Nut 14 der Statorhälften 12 kommen soll, zumindest abschnittsweise mit einem Backlack beschichtet. Das eingelegte Isolierpapier 30 kann dann, sobald es in die zugehörige Nut 14 eingelegt ist, für einige Sekunden an die Nutinnenseiten angepresst werden. Dabei schmilzt die Backlackbeschichtung an dem Isolierpapier 30 an und verklebt dieses mit der Statorhälfte 12. Eine Fixierung des Isolierpapiers 30 bei dem nachfolgenden Prozessschritt des Bewickelns ist folglich nicht mehr notwendig.

Das eingelegte Isolierpapier 30 weist dabei, wie bereits vorstehend beschrieben, einen radialen Überstand 32 über die Polspitzen 16 der jeweiligen Statorhälften 12 hinaus auf. Dieser Überstand 32 kann während des nachfolgenden Wickelvorgangs zusätzlich nach radial innen gezogen werden, um während des Bewickelns sicherzustellen, dass das Isolierpapier 30 nicht durch den Spulendraht 20 geknickt wird.

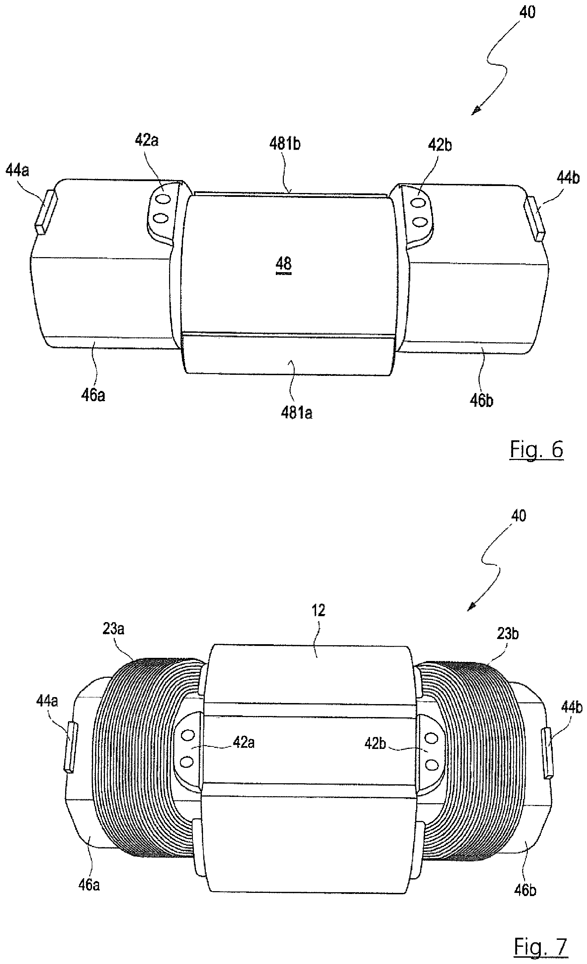

In einem weiteren Schritt wird jede der Statorhälften 12 automatisiert mit Hilfe eines Wickelarms mit dem Spulendraht 20 bewickelt. Um eine Bewicklung der Statorhälften 12 zu erreichen, bei der der Füllgrad der Spulennut 14 über 100 % liegt, kann eine wie in Fig. 6 dargestellte Wickelschablone 40 verwendet werden. Die Wickelschablone 40 zeigt dabei ein näherungsweise halbzylindrisches Mittelstück 48, an dessen Stirnseiten jeweils die beiden von diesem am Umfang etwas abgesetzten Schablonenenden 46a und 46b angeordnet sind. Dabei ist das Mittelstück 48 dazu vorgesehen, von der Innenseite her auf eine Statorhälfte 12 aufgesetzt zu werden, wobei es mittels der Schablonenenden 46a und 46b auf dieser in Axialrichtung zentriert wird. Das Mittelstück 48 zeigt dabei die Anlagenflächen 481a und 481b, welche bei eingesetzter Wickelschablone 40 über die Polhörner der Statorhälfte überstehen und so eine zusätzliche temporäre Nut schaffen, in welcher der Spulendraht 20 gewickelt werden kann, wobei er dort während und nach dem Wickelvorgang mittels der Wickelschablone 40 in dieser temporären Nut geführt und gehalten wird.

Ferner zeigt die in Fig. 6 dargestellte Wickelschablone 40 auf ihren Schablonenenden 46a und 46b jeweils einen äußeren Fortsatz 44a, 44b und einen inneren Fortsatz 42a, 42b. Zwischen den Fortsätzen 42a und 44a bzw. 42b und 44b kann beim Wickelvorgang der Spulendraht 20 ebenfalls geführt bzw. angeordnet werden, so dass sich über die Statorhälfte 12 hinausstehend ein Wickelkopf mit einer definierten Form ergibt. Im Unterschied zum Stand der Technik kann also durch die Verwendung der Wickelschablone 40 einerseits erreicht werden, dass auch Bereiche außerhalb der Nut 14 mit Spulendraht 20 gefüllt werden und andererseits auch, dass eine definierte Form eines Wickelkopfes geschaffen werden kann.

Fig. 7 zeigt in einer Ansicht von der Außenseite her die in der Statorhälfte 12 eingesetzte Wickelschablone 40 nach dem Wickelvorgang. Gut erkennbar ist die definierte Ausbildung der Wickelköpfe 23a, b, welche durch die Fortsätze 42a, 44a und 42b, 44b erreicht werden kann. Ansonsten entsprechen die in der Fig. 7 verwendeten Bezugszeichen den bereits in der Fig. 6 verwendeten.

Bevor diese Schablone wieder entnommen wird, um den Statorkörper weiteren Fertigungsschritten zuzuführen, wird die Spule 20a mindestens teilweise verbacken bzw. "angebacken". Aus diesem Grund wird bei dem vorliegenden Herstellungsprozess ein Backlackdraht als Spulendraht 20 verwendet, d.h. ein Kupferdraht mit einer temperaturfesten Grundisolation und einer zusätzlichen Backlack-Deckschicht, welche bei Temperaturen von etwa 150°C bis 200°C erweicht und aushärtet, so dass die einzelnen Spulenwindungen der Spule 20a von dem ausgehärteten Backlack zumindest für die nachfolgenden Handhabungsschritte während der Fertigung in einem Verbund miteinander gehalten werden. Um den Backlack entsprechend zu erwärmen, wird Strom in die Spule 20a eingeleitet, so dass diese sich infolge ihres elektrischen Widerstands auf die gewünschte Temperatur (etwa 150°C bis 200°C) erhitzt. Für eine vorläufige Stabilisierung der Spule 20a genügt ein Stromfluss von ca. 50A für einen Zeitraum für ca. 4s, wodurch die Taktzeiten der Fertigung gering gehalten werden können. In diesem Verfahrensschritt, in dem die einzelnen Drahtwindungen zu einer Spule 20a verbacken werden, kann auch der Überstand 32 des Isolierpapiers 30 an die Spule 20a angebacken werden. Dabei kann das Isolierpapier 30 hierfür ebenfalls eine Backlackbeschichtung zumindest im Bereich seines Überstands 32 auf der der Spule 20a zugewandten Seite aufweisen.

Alternativ ist es jedoch ebenfalls denkbar, das Isolierpapier direkt an der Backlackbeschichtung des Spulendrahtes oder mit Hilfe eines separat aufzubringenden Beschichtungsmittels an der Spule zu verbacken. Weiterhin ist auch denkbar, ein anderes Beschichtungsmittel bzw. eine andere Deckschicht als Backlack zur Fixierung der Spulenwindungen aneinander einzusetzen.

Ein nicht dargestelltes Platzhalterelement, insbesondere ein Stift oder dergleichen kann erfindungsgemäß in den Bereich des Spulenraums in der Weise eingelegt werden, dass sich beim automatisierten Einlegen des Spulendrahts 20 in den Spulenraum der durch das Platzhalterelement begrenzte Hohlraum 36 in der Wicklungsstruktur der Spule 20a oder in wenigstens einer der Spulennuten 14 ergibt. Nach dem Entfernen des Platzhalterelements aus der Wicklungsstruktur der Spule 20a oder aus der wenigstens einen Spulennut 14 kann in den verbleibenden Hohlraum 36 das Temperatursensorelement 34 eingeführt werden.

Die Wickelschablone 40 ist beispielsweise derart ausgebildet, dass in einem Bereich der gewickelten Spule 20a die entsprechende Ausnehmung bzw. der Hohlraum 36 verbleibt, in den in einem weiteren Prozessschritt das Temperatursensorelement 34 in die gewickelte Spule 20a eingeführt werden kann. Alternativ kann das von der Wickelschablone separate Platzhalterelement verwendet werden.

Das Platzhalterelement und damit auch der Hohlraum 36 kann im Bereich des Wickelkopfes 23a, b oder in einer der Spulennuten 14 zwischen der Spule 20a einerseits und der Statorwand und/oder einem der Polhörner 16 andererseits vorgesehen werden.

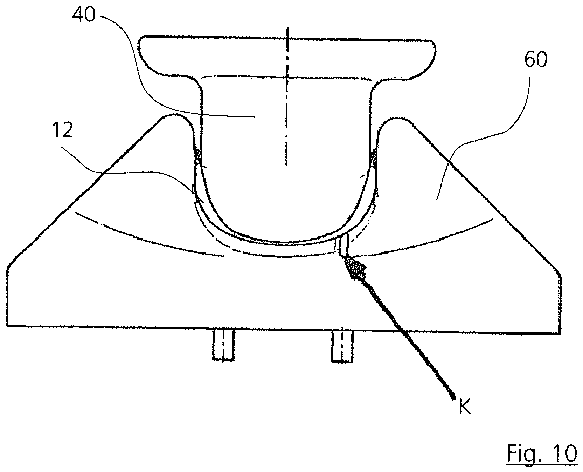

Bei einer Ausgestaltungsvariante (vgl. Fig. 10) kann im Bereich einer Aufnahme 60, die zur Aufnahme der zu bewickelnden Statorhälfte 12 dient und mit der Wickelschablone 40 während des Wickelvorgangs zusammenwirkt, ein Kanal K zum Einbringen eines stiftförmigen Platzhalters vorgesehen sein. In diesen wird der Platzhalter axial eingeschoben, sobald die zu bewickelnde Statorhälfte 12 in die Aufnahme eingelegt wurde. Der Kanal K ist derart angeordnet, dass bei dem gezeigten Ausführungsbeispiel der Platzhalter einen Hohlraum in der Spulenstruktur im Bereich der Spulennut der Statorhälfte 12, d.h. zwischen der Spulennut-Innenwand und der Spule, bereitzustellen vermag. Nach Abschluss des Wickelvorgangs kann der Platzhalter ebenfalls durch eine axiale Bewegung aus dem Kanal K und der Spulennut der bewickelten Statorhälfte 12 entfernt werden.

Die Setzbewegung und die Bewegung zum Entfernen des Platzhalters können als reine Hubbewegung ausgestaltet sein und aufgrund der axialen Richtung automatisiert, beispielsweise mit Hilfe eines angetriebenen Hubkolbens oder dergleichen, erfolgen.

Das Temperatursensorelement 34 wird anschließend in den wenigstens einen Hohlraum 36 der Spule 20a eingeschoben und darin fixiert. Dies kann mittels des Fixiermittels für den Spulendraht 20 erfolgen. Alternativ ist es jedoch ebenfalls denkbar, das Temperatursensorelement 34 direkt an der Backlackbeschichtung des Spulendrahts 20 zu verbacken oder mit Hilfe eines zusätzlichen separat aufzubringenden Sensorfixiermittels an der Spule 20a zu fixieren. Dazu kann das Temperatursensorelement 34 wenigstens teilweise mit dem Sensorfixiermittel beschichtet werden. Das zusätzliche Sensorfixiermittel kann z. B. Klebstoff, Träufelharz oder Backlack umfassen.

Darüber hinaus kann ein vorstehend genanntes Platzhalterelement auch in den Bereich des Spulenraums in der Weise eingelegt werden, dass sich beim automatisierten Einlegen des Spulendrahts 20 in den Spulenraum ein nicht dargestellter, durch das Platzhalterelement begrenzter, Hohlraum im Bereich der Endabschnitte 22a, 22b in der Wicklungsstruktur der Spule 20a ergibt. Nach dem Entfernen des Platzhalterelements aus der Wicklungsstruktur der Spule 20a kann der Schrumpfschlauch 24 auf das jeweilige Drahtende 22a, 22b aufgebracht und in den verbleibenden Hohlraum in der Wicklungsstruktur der Spule 20a eingeführt werden. Anschließend wird der Schrumpfschlauch 24 mittels eines Schlauchfixiermittels in der Wicklungsstruktur der Spule 20a fixiert. Das Schlauchfixiermittel kann Klebstoff oder Träufelharz, vorzugsweise ein dual härtendes Harz umfassen.

Schließlich können die Anschlusselemente an den freien Enden der Drahtendabschnitte 22a, 22b befestigt werden, wobei diese bevorzugt nicht nur an den Drahtendabschnitten 22a, 22b angreifen, sondern im befestigten Zustand auch den Schrumpfschlauch 24 durchdringen, um auf diese Weise eine optimale Isolation und Schutzwirkung zum Schutz der Drahtendabschnitte 22a, 22b bereitstellen zu können.

Nachdem die beiden Statorhälften 12 auf diese Weise hergestellt und bewickelt sind, werden diese miteinander verbunden, um gemeinsam den Statorkörper zu bilden. Hierzu werden die beiden Statorhälften 12 im Bereich ihrer Verbindungsstellen 18 aneinander angelegt, wobei jeweils eine erste Verbindungsstelle 18a einer Statorhälfte 12 in Anlage mit einer zweiten Verbindungsstelle 18b der jeweils anderen Statorhälfte 12 gebracht wird.

Die beiden aneinander anliegenden Statorhälften 12 können in einem weiteren Schritt mittels Tauchimprägnierung aneinander fixiert werden. Hierzu können die beiden aneinander anliegenden Statorhälften 12 bzw. die aufgewickelte Spule 20a erwärmt und in ein Tauchbad, insbesondere mit dual härtendem Harz (Träufelharz bzw. Dualharz) eingetaucht werden, welches sowohl unter Wärmeeinwirkung als auch unter UV-Licht aushärtet. Aufgrund der Kapillarwirkung der Zwischenräume zwischen den einzelnen Windungen der Spule 20a wird diese weitgehend von dem Träufelharz durchsetzt. Dadurch, dass die Spule 20a erwärmt wird, kann das Harz an der Spule 20a und insbesondere auch im Inneren der Spule 20a zwischen den Windungen bereits während des Tauchvorgangs aushärten, wodurch die gesamten Spule 20a mechanisch soweit stabilisiert werden kann, dass sie der mechanischen Beanspruchung im späteren Einsatz standhält. In den Außenbereichen des Stators 10, die nicht die gleiche Temperatur wie die Spule 20a haben, kann im Fall der Verwendung eines Dualharzes das Harz in einem weiteren Schritt mittels UV-Licht ausgehärtet werden.

Die Tauchimprägnierung dient nicht nur als zusätzlicher Schutz des gesamten Statorkörpers vor Abrasion, sondern auch als Statorfixiermittel zur stoffschlüssigen Verbindung der Statorhälften 12 miteinander. Grundsätzlich ist es jedoch auch denkbar, vor dem Schritt der Tauchimprägnierung die beiden Statorhälften beispielsweise durch Kleben, Schweißen oder Löten oder dergleichen stoffschlüssig miteinander zu verbinden. Dabei ist sowohl denkbar, nur einzelne Fixierungspunkte anzubringen, als auch eine Verbindungsnaht entlang der Verbindungsstellen 18 vorzusehen, um die Statorhälften während der Tauchimprägnierung in ihrer relativen Lage zueinander zu halten.

Das Statorfixiermittel, d.h. in dem beschriebenen Fall das Dualharz kann auch als Schlauchfixiermittel dienen bzw. als Sensorfixiermittel.

Die vorstehend beschriebene Tauchimprägnierung ist äußerst vorteilhaft, da diese eine Beschichtung von Spule und Statorkörper sowie das Fixieren der Statorhälften aneinander in einem einzigen Prozessschritt ermöglicht. Weiterhin wird durch die verwendete Tauchimprägnierung sichergestellt, dass der Stator ein in sich sowohl elektrisch optimal isoliertes als auch gegen Abrasion geschütztes Gesamtsystem bildet. Das vorstehend beschriebene teilweise Verbacken bzw. Anbacken der Spulenwindungen kann durch die Kombination mit dem weiteren Prozessschritt des Tauchimprägnierens innerhalb eines Zeitfensters von etwa 3 Sekunden vorgenommen werden, da hierdurch die Windungen der Spule nur relativ zu einander in dem Maße gesichert werden müssen, dass die Wickelschablone entnommen werden kann. Die in einem weiteren Prozessschritt vorgenommene Tauchimprägnierung sichert die ausreichende Stabilität der Spule im Betrieb des elektrischen Antriebs. Wollte man die Spule nur durch Verbacken der Backlackbeschichtung des Spulendrahtes fixieren, wären höhere Backzeiten in der Wickelmaschine notwendig, was insgesamt die Taktzeit bei der Herstellung unvorteilhaft erhöhen würde.

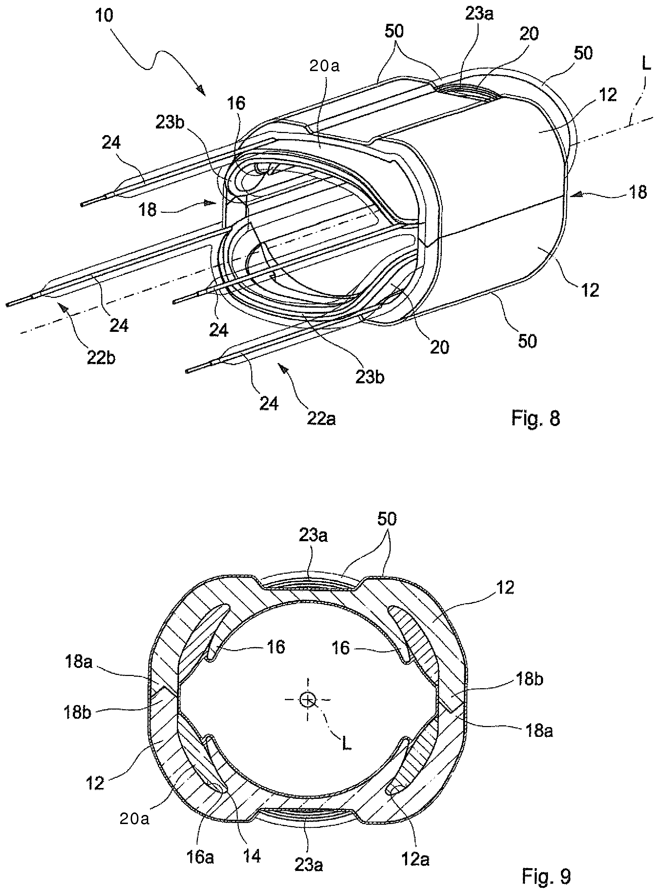

In den Figuren 8 und 9 ist ein Stator 10 gezeigt, welcher wie vorstehend beschrieben mittels einer Tauchimprägnierung beschichtet wurde. Grundsätzlich sind auch andere Beschichtungsverfahren zur Erzeugung des beschichteten Stators 10 wie bspw. Besprühen denkbar. Die in den Figuren 8 und 9 verwendeten Bezugszeichen entsprechen weitgehend den bereits in den Figuren 1 und 2 verwendeten.

Fig. 8 zeigt in einer isometrischen Ansicht einen Stator 10, bei welchem die Wickelköpfe 23a und 23b mit der gemeinsamen Beschichtung 50 versehen sind. Gut erkennbar in Fig. 8 ist, dass die gemeinsame Beschichtung 50 im vorliegend gezeigten Ausführungsbeispiel den Statorkörper an seiner Innen- und Außenseite sowie die Wickelköpfe 23a und 23b wie auch die mit dem Schrumpfschlauch 24 versehenen Drahtenden 22a, 22b bedeckt. Es wird also im vorliegenden Ausführungsbeispiel über den gesamten Stator 10 hinweg eine durchgängige Beschichtung 50 ausgebildet, welche sämtliche Komponenten wirksam schützt und aufgrund ihrer Ausbildung als gemeinsame Beschichtung keine harten Absätze oder Übergänge ausbildet, an welchen abrasiv wirkende Partikel in der vorbeiströmenden Luft angreifen könnten.

Fig. 9 zeigt in einem zur Achse L senkrechten Schnitt den Verlauf der Beschichtung 50. Gut erkennbar aus Fig. 9 ist, dass die Beschichtung 50 im Bereich des Statorkörpers etwas dünner ausgebildet ist als im Bereich der Wickelköpfe 23a. Die dickere Beschichtung im Bereich der Wickelköpfe 23a ist insbesondere auch deswegen vorteilhaft, weil diese in der Regel am stärksten einem abrasiv wirkenden Partikelstrom in der Kühlluft ausgesetzt sind.

Der in den Figuren 8 und 9 gezeigte Stator 10 kann nachfolgend in ein Motorgehäuse (nicht gezeigt) eingesetzt werden.

## Patentansprüche

1. Verfahren zur Herstellung eines Stators (10) mit einem Statorkörper und wenigstens einer daran angebrachten Spule (20a), welche durch ein automatisiertes Einlegen von Spulendraht (20) mit mehreren Wicklungen in einen Spulenraum des Stators (10) gebildet wird, wobei der Spulenraum eine Anzahl von Spulennuten (14) umfasst, die von Polhörnern (16) und einer Statorwand des Stators (10) begrenzt werden,
**gekennzeichnet durch** die folgenden Verfahrensschritte:
- Einlegen wenigstens eines Platzhalterelements in der Weise, dass sich beim automatisierten Einlegen des Spulendrahts (20) in den Spulenraum wenigstens ein durch das wenigstens eine Platzhalterelement begrenzter Hohlraum (36) in der Wicklungsstruktur der Spule (20a) oder in wenigstens einer der Spulennuten (14) ergibt,
- Automatisiertes Einlegen des Spulendrahts (20) in den Spulenraum,
- Entfernen des wenigstens einen Platzhalterelements aus der Wicklungsstruktur der Spule (20a) oder aus der wenigstens einen Spulennut (14), und
- Einführen von wenigstens einem Temperatursensorelements (34) in den verbleibenden wenigstens einen Hohlraum (36) in der Wicklungsstruktur der Spule (20a) oder der wenigstens einen Spulennut (14), um die Temperatur der Spule (20a) während des Betriebs zu erfassen und /oder
- Aufstecken und Einführen von wenigstens einem schlauchförmigen Isolierelement (24) auf wenigstens einen Drahtendabschnitt (22a, 22b) und in den verbleibenden wenigstens einen Hohlraum (36) in der wenigstens einen Spulennut (14).

2. Verfahren nach Anspruch 1,
**dadurch gekennzeichnet, dass** in einem weiteren Verfahrensschritt der eingelegte Spulendraht (20) mittels eines Fixiermittels fixiert wird.

3. Verfahren nach einem der Ansprüche 1 oder 2,
**dadurch gekennzeichnet, dass** das wenigstens eine Temperatursensorelement (34) und/oder das wenigstens eine schlauchförmige Isolierelement (24) in dem wenigstens einen Hohlraum (36) fixiert wird bzw. werden.

4. Verfahren nach einem der Ansprüche 1 bis 3,
**dadurch gekennzeichnet, dass** das wenigstens eine Temperatursensorelement (34) und/oder das wenigstens eine schlauchförmige Isolierelement (24) mittels des Fixiermittels für den eingelegten Spulendraht (20) und/oder eines zusätzlichen Sensorfixiermittels in dem wenigstens einen Hohlraum (36) fixiert wird bzw. werden.

5. Verfahren nach einem der Ansprüche 2 bis 4,
**dadurch gekennzeichnet, dass** das wenigstens eine Temperatursensorelement (34) und/oder das wenigstens eine schlauchförmige Isolierelement (24) wenigstens teilweise mit dem Fixiermittel für den eingelegten Spulendraht (20) oder mit dem zusätzlichen Sensorfixiermittel beschichtet wird bzw. werden, und dass vorzugsweise das Fixiermittel für den eingelegten Spulendraht (20) und/oder das zusätzliche Sensorfixiermittel Klebstoff, Träufelharz oder Backlack umfasst.

6. Verfahren nach einem der Ansprüche 1 bis 4,
**dadurch gekennzeichnet, dass** das wenigstens eine Platzhalterelement einen Stift und/oder einen Teil einer Wickelschablone (40) umfasst.

7. Verfahren nach einem der Ansprüche 1 bis 6,
**dadurch gekennzeichnet, dass** das wenigstens eine Platzhalterelement im Bereich des Wickelkopfes (23a,23b) oder in einer der Spulennuten (14) zwischen der Spule (20a) einerseits und der Statorwand und/oder einem der Polhörner (16) andererseits vorgesehen wird, und dass bevorzugt das Platzhalterelement durch eine axiale Setzbewegung eingelegt wird.

8. Vorrichtung zur Verwendung in einem Verfahren nach einem der Ansprüche 1 bis 7, umfassend eine Vorrichtung zum Einlegen wenigstens eines Platzhalterelements in den Spulenraum des Stators (10),
**dadurch gekennzeichnet, dass** beim Einlegen des wenigstens einen Platzhalterelements in den Spulenraum sichergestellt ist, dass sich beim automatisierten Einlegen des Spulendrahts (20) in den Spulenraum ein durch das wenigstens eine Platzhalterelement begrenzter Hohlraum (36) in der Wicklungsstruktur der Spule (20a) oder in wenigstens einer der Spulennuten (14) ergibt.

## Claims

1. Method for producing a stator (10) having a stator body and at least one coil (20a) mounted thereon, which coil is formed by automated insertion of coil wire (20) with a plurality of windings into a coil space of the stator (10), wherein the coil space comprises a number of coil grooves (14), which are delimited by pole tips (16) and a stator wall of the stator (10),
**characterized by** the following method steps:
- inserting at least one spacer element in such a way that at least one hollow space (36) delimited by the at least one spacer element is produced in the winding structure of the coil (20a) or in at least one of the coil grooves (14) when the coil wire (20) is inserted into the coil space in automated fashion,
- inserting the coil wire (20) into the coil space in automated fashion,
- removing the at least one spacer element from the winding structure of the coil (20a) or from the at least one coil groove (14), and
- introducing at least one temperature sensor element (34) into the remaining at least one hollow space (36) in the winding structure of the coil (20a) or the at least one coil groove (14) in order to detect the temperature of the coil (20a) during operation and/or
- plugging and introducing at least one tubular insulating element (24) onto at least one wire end section (22a, 22b) and into the remaining at least one hollow space (36) in the at least one coil groove (14).

2. Method according to Claim 1,
**characterized in that**, in a further method step, the inserted coil wire (20) is fixed by means of a fixing means.

3. Method according to either of Claims 1 and 2,
**characterized in that** the at least one temperature sensor element (34) and/or the at least one tubular insulating element (24) is/are fixed in the at least one hollow space (36).

4. Method according to one of Claims 1 to 3,
**characterized in that** the at least one temperature sensor element (34) and/or the at least one tubular insulating element (24) is/are fixed by means of the fixing means for the inserted coil wire (20) and/or an additional sensor fixing means in the at least one hollow space (36).

5. Method according to one of Claims 2 to 4,
**characterized in that** the at least one temperature sensor element (34) and/or the at least one tubular insulating element (24) is/are coated at least partly with the fixing means for the inserted coil wire (20) or with the additional sensor fixing means and **in that** the fixing means for the inserted coil wire (20) and/or the additional sensor fixing means preferably comprises adhesive, impregnating resin or baking enamel.

6. Method according to one of Claims 1 to 4,
**characterized in that** the at least one spacer element comprises a pin and/or a part of a former (40).

7. Method according to one of Claims 1 to 6,
**characterized in that** the at least one spacer element is provided in the region of the winding head (23a, 23b) or in one of the coil grooves (14) between the coil (20a) on the one hand and the stator wall and/or one of the pole tips (16) on the other hand and **in that** the spacer element is preferably inserted by way of an axial application movement.

8. Apparatus for use in a method according to one of Claims 1 to 7,
comprising an apparatus for inserting at least one spacer element into the coil space of the stator (10),
**characterized in that**, when the at least one spacer element is inserted into the coil space, it is ensured that a hollow space (36) delimited by the at least one spacer element is produced in the winding structure of the coil (20a) or in at least one of the coil grooves (14) when the coil wire (20) is inserted into the coil space in automated fashion.

## Revendications

1. Procédé de fabrication d'un stator (10) comprenant un corps de stator et au moins une bobine fixée à celui-ci (20a), laquelle est formée par insertion automatique d'un fil de bobinage (20) comprenant plusieurs enroulements dans un espace de bobinage du stator (10), dans lequel l'espace de bobinage comprend un certain nombre de rainures de bobinage (14) qui sont délimitées par des cornes de pôle (16) et une paroi du stator (10),
**caractérisé par** les étapes de procédé suivantes consistant à :
- insérer au moins un élément de réserve de manière à ce que, lors de l'insertion automatique du fil de bobinage (20) dans l'espace de bobinage, au moins une cavité (36) délimitée par le au moins un élément de réserve soit obtenue dans la structure d'enroulement de la bobine (20a) ou dans au moins une des rainures de bobinage (14),
- insérer automatiquement le fil de bobinage (20) dans l'espace de bobinage,
- enlever le au moins un élément de réserve de la structure d'enroulement de la bobine (20a) ou de la au moins une rainure de bobinage (14), et
- introduire au moins un élément de capteur de température (34) dans la au moins une cavité restante (36) dans la structure d'enroulement de la bobine (20a) ou la au moins une rainure de bobinage (14), afin de détecter la température de la bobine (20a) pendant le fonctionnement,
et/ou
- placer et introduire au moins un élément isolant tubulaire (24) sur au moins une section d'extrémité de fil (22a, 22b) et dans la au moins une cavité restante (36) dans la au moins une rainure de bobinage (14).

2. Procédé selon la revendication 1,
**caractérisé en ce que**, dans une autre étape du procédé, le fil de bobinage inséré (20) est fixé à l'aide d'un moyen de fixation.

3. Procédé selon l'une des revendications 1 ou 2,
**caractérisé en ce que** le au moins un élément de capteur de température (34) et/ou le au moins un élément isolant tubulaire (24) est ou sont fixé(s) dans la au moins une cavité (36).

4. Procédé selon l'une des revendications 1 à 3,
**caractérisé en ce que** le au moins un élément de capteur de température (34) et/ou le au moins un élément isolant tubulaire (24) est ou sont fixé(s) dans la au moins une cavité (36) à l'aide du moyen de fixation pour le fil de bobinage inséré (20) et/ou d'un moyen de fixation de capteur supplémentaire.

5. Procédé selon l'une des revendications 2 à 4,
**caractérisé en ce que** le au moins un élément de capteur de température (34) et/ou le au moins un élément isolant tubulaire (24) est ou sont revêtu(s) au moins en partie avec le moyen de fixation pour le fil de bobinage inséré (20) ou avec le moyen de fixation de capteur supplémentaire et **en ce que** de préférence le moyen de fixation pour le fil de bobinage inséré (20) et/ou le moyen de fixation de capteur supplémentaire comprend une colle, une résine d'imprégnation ou un vernis de collage.

6. Procédé selon l'une des revendications 1 à 4,
**caractérisé en ce que** le au moins un élément de réserve comprend une broche et/ou une partie d'un gabarit d'enroulement (40).

7. Procédé selon l'une des revendications 1 à 6,
**caractérisé en ce que** le au moins un élément de réserve est prévu au niveau de la tête de bobine (23a, 23b) ou dans une des rainures de bobinage (14) entre la bobine (20a), d'une part, et la paroi de stator et/ou une des cornes de pôle (16), d'autre part, et **en ce que**, de préférence, l'élément de réserve est inséré par un mouvement de placement axial.

8. Dispositif destiné à une utilisation dans un procédé selon l'une des revendications 1 à 7, comprenant un dispositif destiné à insérer au moins un élément de réserve dans l'espace de bobinage du stator (10),
**caractérisé en ce que**, lors de l'insertion du au moins un élément de réserve dans l'espace de bobinage, on s'assure que, lors de l'insertion automatique du fil de bobinage (20) dans l'espace de bobinage, une cavité (36) délimitée par le au moins un élément de réserve soit obtenue dans la structure d'enroulement de la bobine (20a) ou dans au moins l'une des rainures de bobinage (14).
